# EUROPÄISCHE PATENTSCHRIFT

(11) **EP 3 885 535 B1**
(45) Veröffentlichungstag und Bekanntmachung des Hinweises auf die Patenterteilung: **07.09.2022**
(21) Anmeldenummer: 20165112.2
(22) Anmeldetag: 24.03.2020
(51) Int. Cl.: F01D 5/30

(54) **DICHTRING FÜR EINEN ROTOR UND ROTOR MIT EINEM SOLCHEN**
SEALING RING FOR A ROTOR AND ROTOR WITH SUCH A SEALING RING
BAGUE D'ÉTANCHÉITÉ POUR UN ROTOR ET ROTOR DOTÉ D'UNE TELLE BAGUE D'ÉTANCHÉITÉ

(43) Veröffentlichungstag der Anmeldung: 29.09.2021
(73) Patentinhaber: Siemens Energy Global GmbH & Co. KG, 81739 München (DE)
(72) Erfinder: Krützfeldt, Joachim, 45481 Mülheim an der Ruhr (DE); Schröder, Peter, 45327 Essen (DE)

(56) Entgegenhaltungen:
- EP-A1- 1 541 908
- EP-A1- 2 119 944
- EP-A1- 2 453 150
- WO-A1-95/23304
- DE-A1- 4 218 323
- GB-A- 2 453 231
- US-A1- 2003 102 633

## Beschreibung

Die Erfindung betrifft einen zwei- oder mehrteiligen Dichtring zur Verwendung bei einem Rotor insbesondere bei einer Gasturbine, wobei sich die Enden des Dichtringes überlappen, um somit eine Leckage durch den sich bildenden Spalt zu reduzieren. Dabei ist vorgesehen, dass der Dichtring mittels der Fliehkraft eine Abdichtung gegenüber weiteren Rotorbauteilen bewirkt. Bei der hier vorliegenden Art ist der Querschnitt des Dichtringes sehr klein gegenüber dessen Durchmesser.

Aus dem Stand der Technik ist ein Dichtring bekannt, welcher zwei in einem Winkel zueinander angeordnete Dichtflächen aufweist, welche bei Rotation des Rotors mittels der Fliehkraft eine Abdichtung eines Spaltes bewirken. Hierbei liegt eine der beiden Dichtflächen an einem Rotorbauteil auf einer Seite des Spaltes und die andere Dichtfläche an einem anderen Rotorbauteil auf der anderen Seite des Spaltes an. Das Dokument EP 2 453 150 A1 offenbart einen Dichtungsring, der die technischen Merkmale des Oberbegriffs des unabhängigen Anspruchs 1 umfasst.

Aufgrund der mehrteiligen Ausführung des Dichtringes überlappen sich die Enden der einzelnen Dichtringsegmente, so dass kein erneuter Spalt zwischen den Dichtringsegmenten offenbleibt. Aufgrund des relativ kleinen Querschnitts ist grundsätzlich bei den sich überlappenden Abschnitten eine hälftige Teilung des Dichtringes auf mittlerem Radius vorhanden, so dass beide übereinanderliegende Abschnitte eine hinreichende Steifigkeit aufweisen.

Nachteilig bei bekannter Ausführungsform ist es jedoch, dass eine - wenn auch sehr kleine - nicht vollständig abgedichtete Lücke bei der Überlappung verbleibt. Insbesondere führt die bekannter Ausführungsform dazu, dass einer der beiden Abschnitte nur absatzweise eine der beiden Dichtflächen umfasst, jedoch keine Abdichtung an der anderen Dichtfläche aufweist.

Aufgabe der vorliegenden Erfindung ist daher, die Abdichtung mittels eines Dichtringes weiter zu verbessern.

Die gestellte Aufgabe wird durch eine erfindungsgemäße Ausführungsform nach der Lehre des Anspruchs 1 gelöst. Ein erfindungsgemäßer Rotor mit entsprechendem Dichtring ist im Anspruch 11 angegeben. Vorteilhafte Ausführungsformen sind Gegenstand der Unteransprüche.

Der gattungsgemäße Dichtring dient zunächst einmal zur Verwendung bei einem Rotor zur Abdichtung eines umlaufenden Spaltes zwischen verschiedenen Rotorbauteilen. Um welche Art von Rotor es sich hierbei handelt ist zunächst unerheblich, wobei sich die Verwendung insbesondere bei einer Gasturbine anbietet. Dabei definiert der Dichtring bzw. der Rotor eine Rotorachse.

Hierbei weist der Dichtring eine sich ungefähr radial und in Umfangsrichtung erstreckende Anlagefläche auf. Dies wird als gegeben angesehen, wenn der Winkel zwischen der Anlagefläche und einer radialen Richtung maximal 15° beträgt. Dabei wird die Anlagefläche auf der zur Rotorachse weisenden Seite durch einen inneren Anlagerand und auf der radial nach außen weisenden Seite von einem äußeren Anlagerand begrenzt.

Weiterhin weist der Dichtring eine sich geneigt zur Rotorachse ausgerichtete Stützfläche auf. Hierbei ist vorgesehen, dass ein Winkel zwischen der Stützfläche und der Rotorachse mindestens 15°, jedoch maximal 45° beträgt. Dabei wird die Stützfläche in Richtung der Rotorachse betrachtet auf einer Seite von einem vorderen Stützrand und auf gegenüberliegender Seite von einem hinteren Stützrand begrenzt. Hierbei befindet sich der vordere Stützrand auf der zur Anlagefläche weisenden Seite, während demgegenüber sich der hintere Stützrand auf der von der Anlagefläche wegweisenden Seite am Dichtring befindet.

In Umfangsrichtung umfasst der Dichtring zumindest einen Ringabschnitt mit im Wesentlichen konstantem Querschnitt. Weiterhin weist der Dichtring einen Anpressabschnitt sowie einen Dreiecksabschnitt auf. Dabei schließt sich der Anpressabschnitt einstückig an einem ersten Abschnittsende des Ringabschnitt in Umfangsrichtung an. Demgegenüber ist der Dreiecksabschnitt an einem zweiten Abschnittsende einstückig mit einem Ringabschnitt verbunden, wobei es sich um den gleichen Ringabschnitt wie zuvor oder um einen anderen Ringabschnitt handeln kann. Somit entsteht eine Trennstelle. Dabei ist vorgesehen, dass an der zumindest einen Trennstelle der Anpressabschnitt den Dreiecksabschnitt in Umfangsrichtung überlappt und somit einen Überlappungsbereich bildet.

Dabei verbleibt ein Spalt zwischen dem zwischen dem freien Ende des Anpressabschnitts und dem zweiten Abschnittsende sowie weiterhin zwischen dem freien Ende des Dreiecksabschnitts und dem ersten Abschnittsende. Die Spalte sind hierbei erforderlich, um einen Toleranzausgleich sowie unterschiedliche thermische Dehnungen der Rotorbauteile und des Dichtringes zuzulassen. Dabei können die Spalte konstruktiv mit gleichen Abmessungen vorgesehen sein.

Die Trennung zwischen dem Dreiecksabschnitt und dem Anpressabschnitt bildet hierbei eine Trennfläche. Die Trennfläche wird hierbei begrenzt in axialer Richtung betrachtet zum einen durch einen unteren Trennflächenrand und gegenüberliegend von einem oberen Trennflächenrand. Dabei befindet sich gattungsgemäße der untere Trennflächenrand zwischen der Mitte der Anlagefläche und dem inneren Anlagerand der Anlagefläche. Entsprechend weist sowohl der Dreiecksabschnitt als auch der Anpressabschnitt abschnittsweise die Anlagefläche auf. Sofern sichergestellt ist, dass sowohl der Dreiecksabschnitt als auch der Anpressabschnitt zuverlässig am benachbarten Rotorbauteil mit der Anlagefläche anliegen, ist die Dichtigkeit an dieser Stelle im Wesentlichen gewährleistet.

Aufgrund der Ausrichtung der Stützfläche in Annäherung an eine Zylinderfläche ist es mit der üblichen hälftigen Teilung zwischen den beiden überlappenden Abschnitten im Stand der Technik mit einer Trennfläche, welche im Wesentlichen sich als Abschnitt einer Zylinderfläche darstellt, ausgeschlossen, dass der zur Rotorachse weisende Abschnitt einen Teil der Stützfläche aufweist.

Demgegenüber ist erfindungsgemäß vorgesehen, dass die Trennfläche nunmehr entgegengesetzt zur Stützfläche ausgerichtet wird und dabei eine ungleiche Verteilung zwischen Dreiecksabschnitt und Stützabschnitt hingenommen wird. Dabei ist vorgesehen, dass die Querschnittsfläche des Dreiecksabschnitt lediglich bis zu dem 0,3-Fachen der Querschnittsfläche des Ringabschnitts entspricht. Folglich beträgt der Querschnitt des Anpressabschnitt zumindest dem doppelten Querschnittsfläche des Dreiecksabschnitts. Dies führt zu Möglichkeit den oberen Trennflächenrand in einem Bereich zwischen der Mitte der Stützfläche und dem hinteren Stützrand anzuordnen.

Durch die erfindungsgemäße Ausführungsform wird es ermöglicht, den Dreiecksabschnitt sowie den Anpressabschnitt als sich überlappende Abschnitte des Dichtringes gleichfalls mit zumindest ansatzweise einem Abschnitt der Stützfläche zu versehen, sodass auch in diesem Bereich eine Abdichtung im Wesentlichen gewährleistet werden kann. Somit kann eine Leckage im Bereich der Überlappung gegenüber der Ausführung im Stand der Technik weiter reduziert werden.

Die Abdichtung mittels des Dichtringes wird vorteilhaft gewährleistet, wenn die entsprechenden Dichtflächen eine hinreichende Breite aufweisen. (Im Allgemeinen gilt, dass es vorteilhaft ist, wenn die Dichtfläche möglichst breit ausgeführt wird.) Hierzu ist es vorteilhaft, wenn die Anlagefläche eine Anlagehöhe vom unteren Anlagerand bis zum oberen Anlagerand, gemessen in radialer Richtung, von zumindest dem 0,5-Fachen der Höhe des Dichtringes, gleichfalls als Abmessung in radialer Richtung gemessen, aufweist. Ebenso ist es vorteilhaft, wenn die Stützfläche eine Stützbreite vom hinteren Stützrand bis zum vorderen Stützrand, gemessen in axialer Richtung, von zumindest dem 0,5-Fachen der Breite des Dichtringes, gleichfalls in axialer Richtung gemessen, aufweist.

Zur Gewährleistung eines vorteilhaften Querschnitts des Dreiecksabschnitts ist es vorteilhaft, wenn der untere Trennflächenrand in der Nähe des inneren Anlagerandes angeordnet ist, wobei der Abstand zur Mitte der Anlagefläche größer ist als der Abstand zum inneren Anlagerand. Analog ist es vorteilhaft, wenn der obere Trennflächenrand in der Nähe des hinteren Stützrandes angeordnet wird. Hierzu ist der Abstand des oberen Trennflächenrandes zum hinteren Stützrand geringer zu wählen als der Abstand des oberen Trennflächenrandes zur Mitte der Stützfläche.

Weiterhin ist es zur erfindungsgemäßen Trennung zwischen dem Dreiecksabschnitt und dem Anpressabschnitt vorteilhaft, wenn die Trennfläche entgegengesetzt zu Stützfläche geneigt ausgerichtet ist. Hierzu ist es vorteilhaft, wenn ein Winkel zwischen der Trennfläche und der radialen Richtung zwischen 35° und 55° beträgt. Daraus folgt naheliegend, dass der vorteilhafte Winkel zwischen der Trennfläche und der Rotorachse gleichfalls zwischen 35° und 55° beträgt. Besonders vorteilhaft ist es jedoch, wenn der Winkel zwischen der Trennfläche und der radialen Richtung bzw. zwischen der Trennfläche und der Rotorachse zwischen 40° und 50° beträgt und insofern diagonal - entgegengesetzt zur Stützfläche geneigt - angeordnet wird.

Wenngleich es möglich wäre einen einstückigen Dichtring mit nur einer Trendstelle einzusetzen, so wird jedoch in vorteilhafter Weise der Dichtring von zumindest zwei Ringsegmenten gebildet. Dabei weist jedes der Ringsegmente einen Ringabschnitt auf, an dessen beiden in Umfangsrichtung entgegengesetzten Enden sich entweder ein Anpressabschnitt oder ein Dreiecksabschnitt anschließt. Folglich gibt es bei zwei Ringsegmenten zwei Trennstellen.

Unabhängig von dem Vorhandensein von zwei oder mehr Ringsegmenten ist es weiterhin vorteilhaft, wenn ein schließendes Ringsegment vorhanden ist. Dabei ist vorgesehen, dass am schließenden Ringsegment beidseitig einen Dreiecksabschnitt vorhanden ist. Dieses vereinfacht eine abschließende Montage des schließenden Ringsegments zur Bildung des Dichtringes.

In einer weiteren Ausführungsform wird vorteilhaft ein schließendes Ringsegment eingesetzt, welches sich über einen Umfang von maximal 20° erstreckt. Diese Ausführung hat den besonderen Vorteil, dass zur Realisierung eines Freiraums, beispielsweise zur Montage einer Laufschaufel, lediglich ein kleines Stück des Dichtringes in Form des schließenden Ringsegmentes zu entfernen ist. Hierbei ist zunächst unerheblich, ob dies kombiniert wird mit der Anordnung der Dreiecksabschnitte an dessen gegenüberliegenden Enden.

Die Herstellung und Lagerung der Ringsegmente vereinfacht sich, wenn zumindest zwei, besonders bevorzugt alle vorhandenen, Ringsegmente von Gleichteilen gebildet werden.

In aller Regel ist davon auszugehen, dass der abzudichtende Spalt zwischen den benachbarten Rotorbauteilen klein gegenüber der Breite des Dichtringes ist. Entsprechend wird zur Abdichtung vorteilhaft der Abstand der Stützfläche und somit des äußeren Anlagerandes zur Anlagefläche und somit zum äußeren Anlagerand nicht größer als dem 0,2-Fachen der Dichtringbreite gemessen in axialer Richtung gewählt. Somit kann eine Abdichtung optimal nahe am Spalt erfolgen.

Entsprechend der bestimmungsgemäßen Abdichtung eines Spaltes und somit eines freien Abstandes zwischen benachbarten Rotorbauteilen ist eine Erstreckung der Stützfläche mit dem vorderen Stützrand bis an die Anlagefläche, d.h. an den äußeren Anlagerand, demgegenüber nicht erforderlich. Insofern kann zur Vereinfachung und Vermeidung einer scharfen Kante eine Abrundung und/oder Abflachung vom äußeren Anlagerand zum vorderen Stützrand vorgesehen sein.

Zur Vermeidung einer scharfkantigen Nut in einer Rotorscheibe zur Anordnung des Dichtringes bei Berücksichtigung eines möglichst geringen Bauraums für den Dichtring und hierbei der Gewährleistung der notwendigen Stabilität des Dichtringes ist es vorteilhaft, wenn dieser gegenüberliegend zur Anlagefläche abgerundet ist. Insofern weist der Dichtring im Querschnitt betrachtet gegenüber der Anlagefläche im Anschluss an die Stützfläche radial einwärts weisend einen bogenförmigen Abschnitt auf. Dieses ermöglicht eine analoge Formgebung in der Rotorscheibe und vermeidet somit die Bildung von Spannungsspitzen in der hierzu erforderlichen (in Umfangsrichtung durchgehenden oder mehrteiligen) umlaufenden Nut.

Dazu ist es weiterhin vorteilhaft, wenn gegenüber der Stützfläche auf der zur Rotorachse weisenden Seite ein gerader Abschnitt angeordnet ist, welcher den bogenförmigen Abschnitt direkt oder indirekt mit der Anlagefläche bzw. dem inneren Anlagerand verbindet.

Die Realisierung eines erfindungsgemäßen Dichtringes ermöglicht die Bildung eines neuartigen erfindungsgemäßen Rotors. Die Verwendung des Rotors ist zunächst unerheblich, wobei sich die Lösung insbesondere zur Verwendung bei einer Gasturbine anbietet. Hierbei umfasst der Rotor zumindest eine Rotorscheibe, an der im Umfang verteilt eine Mehrzahl Laufschaufeln angeordnet sind. Hierzu weist die Rotorscheibe in entsprechende Anzahl sich durch die Rotorscheibe erstreckende Schaufelhaltenuten auf, in denen jeweils ein Schaufelfuß der jeweiligen Laufschaufeln angeordnet ist. Die Rotorscheibe weist zusammen mit den Laufschaufeln bzw. deren Schaufelfüße eine Stirnseite auf, vor der im Umfang verteilt eine Mehrzahl Dichtelemente angeordnet ist. Hierbei decken die Dichtelemente in bevorzugter Weise die Schaufelfüße und insofern die Schaufelhaltenuten ab.

Zwischen der Rotorscheibe mit den Laufschaufeln und den Dichtelementen ist ein umlaufender Spalt vorhanden, welcher bei gattungsgemäßer Ausführung eines Rotors mit einem Dichtring weitgehend abgedichtet wird.

Erfindungsgemäß ist nunmehr vorgesehen, eine verbesserte Lösung des Dichtringes wie zuvor beschrieben einzusetzen und somit die Abdichtung weiter zu verbessern.

Der hierbei eingesetzte Dichtring weist vorteilhafter Weise ein schließendes Ringsegment auf, welches ohne vollständige Entfernung des gesamten Dichtringes die Montage bzw. Demontage von Laufschaufeln ermöglicht. Hierzu erstreckt sich das schließende Ringsegment über eine Länge, welche größer ist als es der Breite eines Schaufelfußes entspricht. Somit kann bei Entfernung des schließenden Ringsegmentes der Schaufelfuß durch die entstehende Lücke eingebaut bzw. ausgebaut werden.

Dabei ist vorteilhafterweise das schließende Ringsegment in Umfangsrichtung nicht länger ausgeführt als nötig. Hierzu wird der überdeckende Winkelbereich des schließenden Ringsegmentes kleiner gewählt als es der zweifachen Teilung der Schaufelhaltenuten entspricht. Bei beispielsweise 72 Schaufelhaltenuten erstreckt sich das schließende Ringsegment über maximal 10°.

In den nachfolgenden Figuren wird eine beispielhafte Ausführungsform für einen erfindungsgemäßen Dichtring skizziert. Es zeigen:
- Fig. 1: eine beispielhafte Ausführungsform für einen erfindungsgemäßen Dichtring bestehend aus drei Ringsegmenten;
- Fig. 2: ein schließendes Ringsegment in der Anordnung an einer Rotorscheibe;
- Fig. 3: eine Detailansicht auf das schließende Ringsegment;
- Fig. 4: der Überlappungsbereich mit einer Ansicht auf die Anlagefläche;
- Fig. 5: der Überlappungsbereich mit einer Ansicht auf die Stützfläche;
- Fig. 6: ein Schnitt durch den Überlappungsbereich;
- Fig. 7: das schließende Ringsegment in perspektivischer Ansicht;
- Fig. 8: eine Ansicht auf das zweite Abschnittsende;
- Fig. 9: eine perspektivische Ansicht auf den Anpressabschnitt.

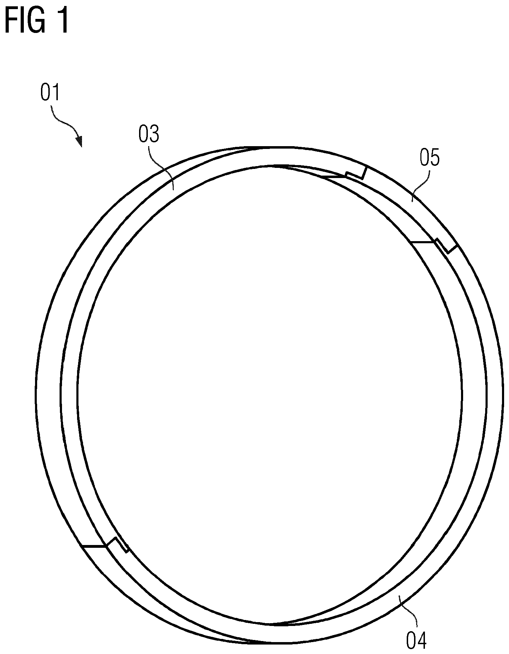

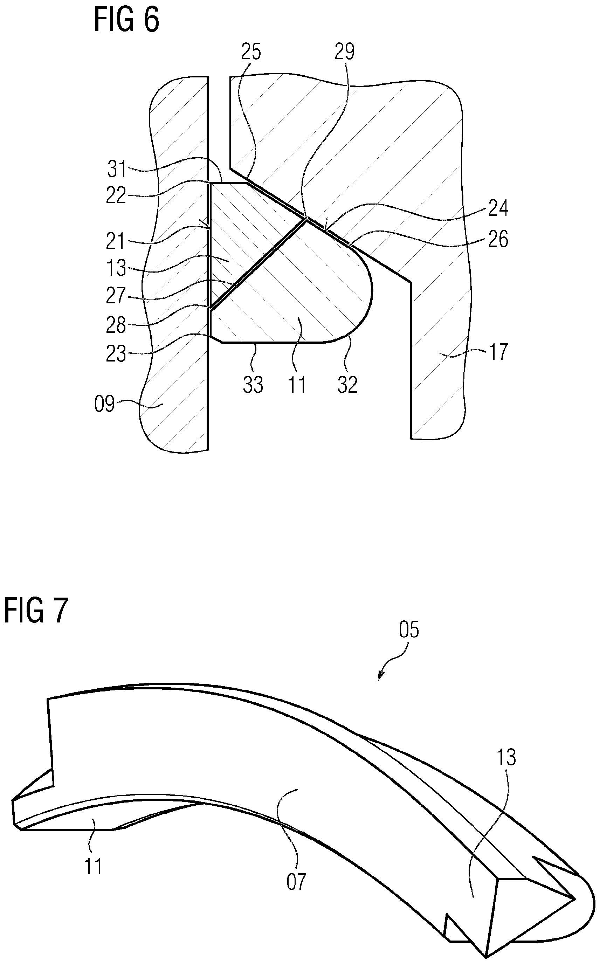

In der Figur 1 wird in einer perspektivischen Ansicht eine beispielhafte Ausführungsform eines Dichtringes 01 dargestellt. In diesem Ausführungsbeispiel besteht der Dichtring 01 aus drei Ringsegmenten 03, 04, 05, wobei zwei Ringsegmenten 03 und 04 als Gleichteile ausgeführt sind und sich über einen Winkel von etwas mehr als 170° erstrecken. Weiterhin ist ein schließendes Ringsegment 05 vorhanden, welches 05 sich über einen Winkelbereich von ungefähr 15° erstreckt - siehe auch Fig. 7.

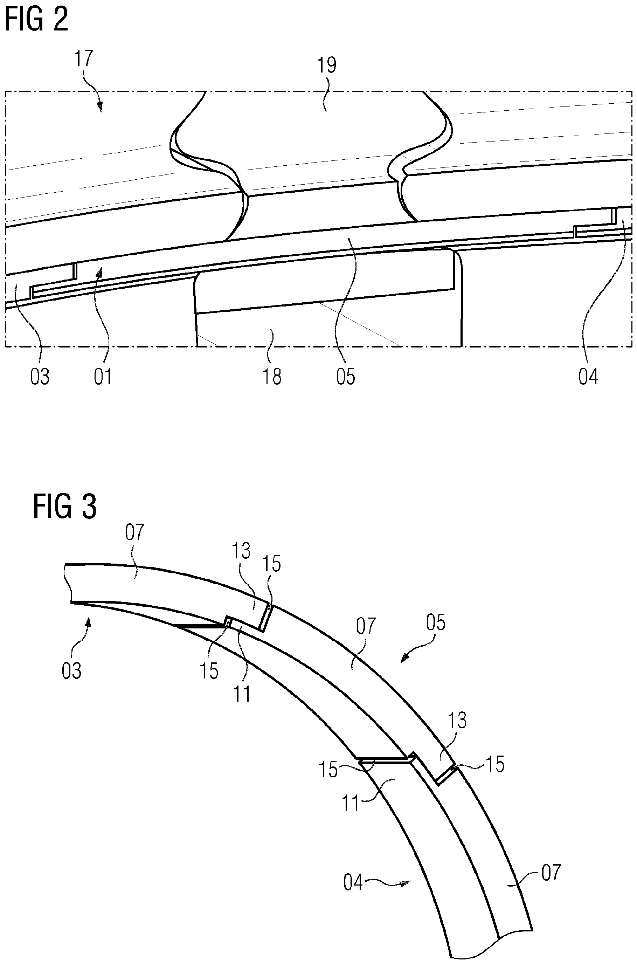

Wie aus der Figur 2 ansatzweise zu erkennen ist, ist der Dichtring 01 in einer Nut an einer Rotorscheibe 17 aufgenommen. Diese 17 weist hierbei im Umfang verteilt mehrere Schaufelhaltenuten 18 auf, in denen jeweils Laufschaufeln 19 mit einem Schaufelfuß befesigt sind. Das schließende Ringsegment 05 ist vor einer Schaufelhaltenut 18 und somit vor dem Schaufelfuß der Laufschaufel 19 angeordnet. Der beidseitig vorhandenen Überlappungsbereich zu den benachbarten Ringsegmenten 03, 04 ist in einem Bereich vor der Rotorscheibe 17 zwischen den Schaufelhaltenuten 18 angeordnet.

In der Figur 3 wird ein Ausschnitt des Dichtringes aus Fig. 1 im Bereich des schließenden Ringsegments 05 skizziert. Die Ringsegmente 03, 04 und 05 weisen jeweils einen sich abschnittsweise in Umfangsrichtung erstreckenden Ringabschnitt 07 mit konstantem Querschnitt auf. Beidseitig an den Enden der Ringabschnitte 07 befindet sich der jeweilige Überlappungsbereich, wobei am jeweiligen Ende entweder ein Anpressabschnitt 11 oder ein Dreiecksabschnitt 13 angeordnet ist. Zwischen den benachbarten Ringsegmenten 03, 04 und 05 gibt es im Überlappungsbereich jeweils einen Spalt 15.

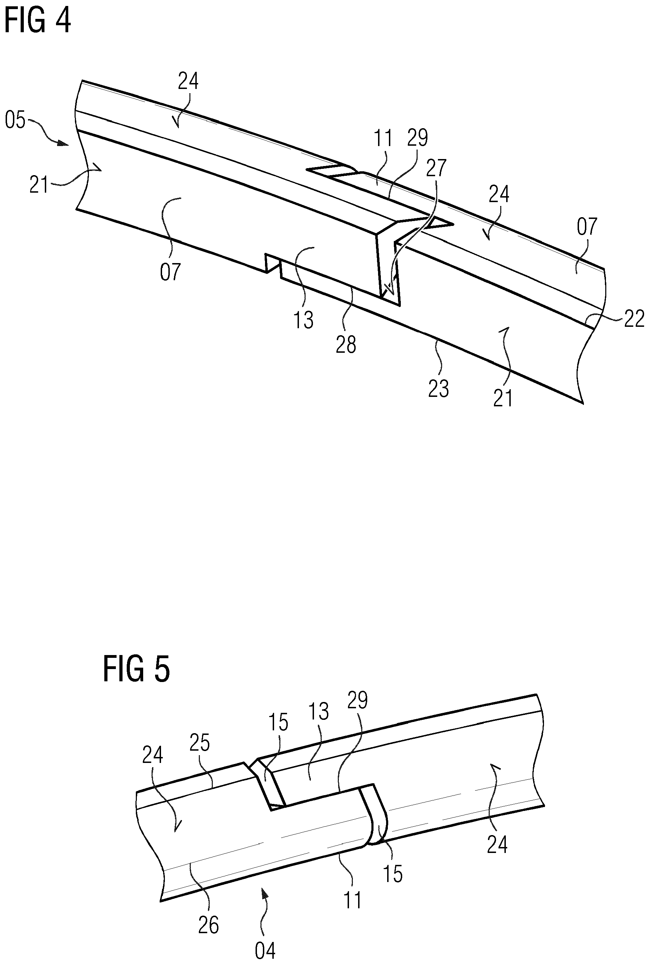

Zur genauen Ausführung des Dichtringes 01 wird insbesondere auf die Figuren 4, 5 und 6 verwiesen. Der Dichtring 01 weist zunächst einmal auf der von der Rotorscheibe 17 wegweisenden Seite eine Anlagefläche 21 auf. Diese 21 erstreckt sich in diesem Ausführungsbeispiel in radialer Richtung und wird begrenzt auf der zur Rotorachse weisenden Seite durch einen inneren Anlagerand 23 und auf der radial nach außen weisenden Seite durch einen äußeren Anlagerand 22. An der Anlagefläche 21 kommen in diesem Ausführungsbeispiel Dichtelemente 09 zur Anlage.

Weiterhin weist der Dichtring 01 auf der radial nach außen sowie zur Rotorscheibe 17 weisenden Seite eine geneigte Stützfläche 24 auf. Diese 24 ist in einem Winkel von ungefähr 40° gegenüber der Rotorachse geneigt. Die Stützfläche 24 wird hierbei auf der radial nach außen weisenden Seite von einem vorderen Stützrand 25 begrenzt, wobei sich dieser 25 gleichfalls auf der zur Anlagefläche 21 weisenden Seite am Dichtring 01 befindet. Gegenüberliegend wird die Stützfläche 24 begrenzt durch den hinteren Stützrand 26, welcher 26 am zur Rotorachse weisenden und von der Anlagefläche 21 wegweisenden Ende der Stützfläche 24 angeordnet ist.

Aus der Schnittdarstellung in Fig. 6 ist weiterhin zu erkennen, dass auf der radial auswärts weisenden Seite die Stützfläche 24 mit der Anlagefläche 21 über eine Abflachung 31 verbunden ist. Gegenüberliegend zur Anlagefläche 21 im Anschluss an die Stützfläche 24 weist der Dichtring 01 einen bogenförmigen Abschnitt 32 auf. Dieser 32 geht über in einen geraden Abschnitt 33 auf der zur Rotorachse weisenden Seite des Dichtringes 01.

Der Dichtring 01 weist in radialer Richtung, gemessen vom geraden Abschnitt 33 bis zur Abflachung 31, eine Dichtringhöhe auf. In Richtung der Rotorachse ist eine Dichtringbreite von der Anlagefläche 21 bis zum gegenüberliegenden Ende bestimmt. Wie zu erkennen ist, ist eine Breite der Anlagefläche 21 vom inneren Anlagerand 23 bis zum äußeren Anlagerand 22 größer als das 0,9-Fache der Dichtringhöhe. Demgegenüber entspricht eine Breite der Stützfläche 24 gemessen in Richtung der Rotorachse vom vorderen Stützrand 25 bis zum hinteren Stützrand 26 ungefähr dem 0,6-Fachem der Dichtringbreite.

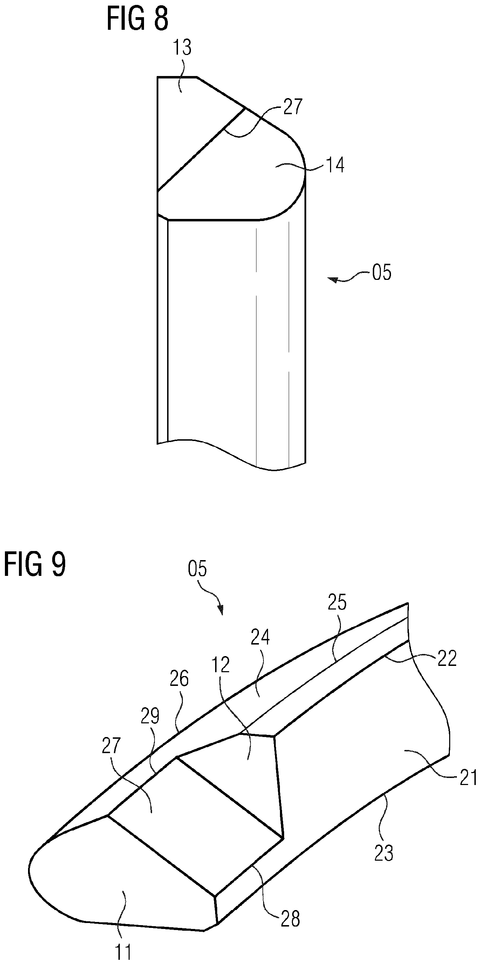

Der Überlappungsbereich zwischen zwei Ringsegmenten 03, 04 und 05 wird gebildet jeweils durch aneinander anliegenden Dreiecksabschnitt 13 und Anpressabschnitt 11 - siehe insbesondere Figuren 4 und 5. Dabei schließt sich der Dreiecksabschnitt 13 in Umfangsrichtung an ein zweites Abschnittsende 14 des entsprechenden Ringabschnitts 07 an - siehe hierzu auch Fig. 8. Demgegenüber schließt sich der Anpressabschnitt 11 in Umfangsrichtung an den benachbarten Ringabschnitt 07 an dessen erstem Abschnittsende 12 an - siehe hierzu Fig. 9. Dabei bildet sich der entsprechende Spalt 15 einerseits zwischen dem freien Ende des Dreiecksabschnitts 13 und dem benachbarten ersten Abschnittsende 12 sowie zwischen dem freien Ende des Anpressabschnitts 11 und dem benachbarten zweiten Abschnittsende 14.

Der Dreiecksabschnitt 13 liegt hierbei an dem Anpressabschnitt 11 entlang einer Trennfläche 27 an. Die Trennfläche 27 erstreckt sich hierbei von einem unteren Trennflächenrand 28 bis zu einem oberen Trennflächenrand 29. Wie insbesondere aus Fig. 4 zu erkennen ist, schneidet der untere Trennflächenrand 28 abschnittsweise die Anlagefläche 21 zwischen dem ersten Abschnittsende 12 und dem zweiten Abschnittsende 14. Somit ist offensichtlich, dass sowohl der Dreiecksabschnitt 13 als auch der Anpressabschnitt 11 abschnittsweise die Anlagefläche 21 aufweisen.

Entgegen der üblichen Ausführungsformen ist erfindungsgemäß vorgesehen, dass sich die Trennfläche 27 geneigt zur Stützfläche 24 erstreckt. Dies führt dazu, dass der obere Trennflächenrand 29 abschnittsweise die Stützfläche 24 schneidet. Somit weist sowohl der Dreiecksabschnitt 13 als auch der Anpressabschnitt 11 abschnittsweise die Stützfläche 24 auf. In diesem Ausführungsbeispiel ist die Trennfläche 27 diagonal angeordnet und weist hierbei einen Winkel von 45° zur Rotorachse und somit 45° zur radialen Richtung auf. In diesem Zusammenhang ist ausdrücklich darauf hinzuweisen, dass es im Rahmen der Erfindung auch zulässig ist, wenn sich der untere Trennflächenrand 29 unmittelbar am hinteren Stützrand 26 befindet und somit am Anpressabschnitt 11 lediglich ein minimaler Streifen der Stützfläche 24 verbleibt.

## Patentansprüche

1. Dichtring (01) zur Verwendung bei einem Rotor, insbesondere einer Gasturbine,
- mit einer Anlagefläche (21), welche (21) einen Winkel zur einer radialen Richtung von maximal 15° aufweist und von einem äußeren Anlagerand (22) und einem inneren Anlagerand (23) begrenzt ist, und
- mit einer Stützfläche (24), welche (24) einen Winkel zur Rotorachse von zumindest 15° und maximal 45° aufweist und von einem vorderen Stützrand (25) und einem hinteren Stützrand (26) begrenzt ist,
umfassend zumindest
- einen sich in Umfangsrichtung erstreckenden Ringabschnitt (07) und
- einen Anpressabschnitt (11), welcher sich einstückig in Umfangsrichtung an einem ersten Abschnittsende (12) des Ringabschnitts (07) anschließt und einen Spalt (15) zu einem zweiten Abschnittsende (14) des Ringabschnitts oder eines anderen Ringabschnitts (07) bildet, und
- einen Dreiecksabschnitt (13), welcher (13) sich einstückig in Umfangsrichtung am zweiten Abschnittsende (14) anschließt und einen Spalt zum ersten Abschnittsende (12) bildet und den Anpressabschnitt (11) entlang einer Trennfläche (27) überlappt, wobei ein unterer Trennflächenrand (28) der Trennfläche (27) zwischen der Mitte der Anlagefläche (21) und dem inneren Anlagerand (23) angeordnet ist,
**dadurch gekennzeichnet,**
**dass** die Querschnittsfläche des Dreieckabschnitts (13) maximal der 0,3-fachen Querschnittsfläche des Ringabschnitts (07) entspricht und ein oberer Trennflächenrand (29) der Trennfläche (27) zwischen der Mitte der Stützfläche (24) und dem hinteren Stützrand (26) angeordnet ist.

2. Dichtring (01) nach Anspruch 1,
aufweisend eine Dichtringbreite in Achsrichtung und eine Dichtringhöhe in radialer Richtung,
wobei die Anlagefläche (21) eine Anlagehöhe von zumindest der 0,5-fachen Dichtringhöhe aufweist und/oder wobei die Stützfläche (24) eine Stützbreite von zumindest der 0,5-fachen Dichtringbreite aufweist.

3. Dichtring (01) nach Anspruch 1 oder 2,
wobei der Abstand des unteren Trennflächenrandes (28) zum inneren Anlagerand (23) geringer als zur Mitte der Anlagefläche (21) ist; und/oder
wobei der Abstand des oberen Trennflächenrandes (29) zum hinteren Stützrand (26) geringer als zur Mitte der Stützfläche (24) ist.

4. Dichtring (01) nach einem der Ansprüche 1 bis 3, wobei ein Winkel zwischen der Trennfläche (27) und der radialen Richtung sowie zwischen der Trennfläche (27) und der Rotorachse zwischen 35° und 55°, insbesondere zwischen 40° und 50° beträgt.

5. Dichtring (01) nach einem der Ansprüche 1 bis 4, gebildet aus zumindest zwei Ringsegmenten (03, 04, 05), welche (03, 04, 05) jeweils von einem Ringabschnitt (07) und beidseitig jeweils von einem Anpressabschnitt (11) oder einem Dreiecksabschnitt (13) gebildet werden.

6. Dichtring (01) nach einem der Ansprüche 1 bis 5, wobei ein schließendes Ringsegment beidseitig einen Dreiecksabschnitt aufweist.

7. Dichtring (01) nach einem der Ansprüche 1 bis 6, wobei sich der Ringabschnitt (07) eines schließenden Ringsegments (05) über maximal 20° erstreckt.

8. Dichtring (01) nach einem der Ansprüche 1 bis 5, wobei zumindest zwei, insbesondere alle, Ringsegmente (03, 04) von Gleichteilen gebildet werden.

9. Dichtring (01) nach einem der Ansprüche 1 bis 8, wobei der Abstand des äußeren Anlagerandes (22) zum vorderen Stützrand (25) maximal der 0,2-fachen Dichtringbreite entspricht, wobei insbesondere der äußere Anlagerand (22) und der vordere Stützrand (25) über eine Abrundung und/oder Abflachung (31) miteinander verbunden sind.

10. Dichtring (01) nach einem der Ansprüche 1 bis 9, welcher (01) im Querschnitt gegenüberliegend zur Anlagefläche (21) im Anschluss an die Stützfläche (24) einen bogenförmigen Abschnitt (32), und insbesondere zwischen dem bogenförmigen Abschnitt (32) und der Anlagefläche (21) auf der zur Rotorachse weisenden Seite einen geraden Abschnitt (33), aufweist.

11. Rotor, insbesondere einer Gasturbine, umfassend eine Rotorscheibe (17), welche (17) im Umfang verteilt eine Mehrzahl an Schaufelhaltenuten (18) aufweist, und eine Mehrzahl Laufschaufeln (19), welche (19) jeweils mit einem Schaufelhaltefuß in einer Schaufelhaltenut (18) befestigt sind, und eine Mehrzahl vor einer Stirnseite der Rotorscheibe (17) und einer Stirnseite der Schaufelhaltefüße angeordneter Dichtelemente (09), wobei zwischen der Stirnseite und den Dichtelementen (09) ein Dichtring (01) angeordnet ist,
**gekennzeichnet durch** die Ausführung des Dichtringes (01) nach einer der vorhergehenden Ansprüche.

12. Rotor nach Anspruch 11,
wobei das schließende Ringsegment (05) breiter als ein Schaufelhaltefuß ist und sich über einen Winkel kleiner als die doppelte Teilung der Schaufelhaltenuten (18) erstreckt.

## Claims

1. Sealing washer (01) for use in a rotor, in particular of a gas turbine,
- with a bearing face (21) which (21) has an angle with respect to a radial direction of at most 15° and is delimited by an outer bearing edge (22) and an inner bearing edge (23), and
- with a supporting face (24) which (24) has an angle with respect to the rotor axis of at least 15° and at most 45° and is delimited by a front supporting edge (25) and a rear supporting edge (26),
comprising at least
- a washer section (07) which extends in the circumferential direction, and
- a pressing section (11) which adjoins a first section end (12) of the washer section (07) in one piece in the circumferential direction and forms a gap (15) with respect to a second section end (14) of the washer section or another washer section (07), and
- a triangular section (13) which (13) adjoins the second section end (14) in one piece in the circumferential direction and forms a gap with respect to the first section end (12) and overlaps the pressing section (11) along a dividing face (27), a lower dividing face edge (28) of the dividing face (27) being arranged between the center of the bearing face (21) and the inner bearing edge (23),
**characterized**
**in that** the cross-sectional area of the triangular section (13) corresponds to at most 0.3 times the cross-sectional area of the washer section (07) and an upper dividing face edge (29) of the dividing face (27) is arranged between the center of the supporting face (24) and the rear supporting edge (26).

2. Sealing washer (01) according to Claim 1,
having a sealing washer width in the axial direction and a sealing washer height in the radial direction,
the bearing face (21) having a bearing height of at least 0.5 times the sealing washer height, and/or
the supporting face (24) having a supporting width of at least 0.5 times the sealing washer width.

3. Sealing washer (01) according to Claim 1 or 2,
the spacing of the lower dividing face edge (28) being smaller from the inner bearing edge (23) than from the center of the bearing face (21); and/or
the spacing of the upper dividing face edge (29) being smaller from the rear supporting edge (26) than from the center of the supporting face (24).

4. Sealing washer (01) according to one of Claims 1 to 3, an angle between the dividing face (27) and the radial direction as well as between the dividing face (27) and the rotor axis being between 35° and 55°, in particular between 40° and 50°.

5. Sealing washer (01) according to one of Claims 1 to 4, formed from at least two washer segments (03, 04, 05) which (03, 04, 05) are formed in each case by a washer section (07) and on both sides in each case by a pressing section (11) or a triangular section (13).

6. Sealing washer (01) according to one of Claims 1 to 5, a closing washer segment having a triangular section on both sides.

7. Sealing washer (01) according to one of Claims 1 to 6, the washer section (07) of a closing washer segment (05) extending over at most 20°.

8. Sealing washer (01) according to one of Claims 1 to 5, at least two, in particular all, of the washer segments (03, 04) being formed by identical parts.

9. Sealing washer (01) according to one of Claims 1 to 8, the spacing of the outer bearing edge (22) from the front supporting edge (25) corresponding to at most 0.2 times the sealing washer width, the outer bearing edge (22) and the front supporting edge (25), in particular, being connected to one another via a rounded portion and/or flattened portion (31).

10. Sealing washer (01) according to one of Claims 1 to 9, which (01) has, in cross section in a manner which lies opposite the bearing face (21) and is adjacent to the supporting face (24), an arcuate section (32) and, in particular, a straight section (33) between the arcuate section (32) and the bearing face (21) on the side which points toward the rotor axis.

11. Rotor, in particular of a gas turbine, comprising a rotor disk (17) which (17), distributed over the circumference, has a plurality of blade holding grooves (18), and a plurality of rotor blades (19) which (19) are fastened in each case by way of a blade holding root in a blade holding groove (18), and a plurality of sealing elements (09) which are arranged in front of an end side of the rotor disk (17) and an end side of the blade holding roots, a sealing washer (01) being arranged between the end side and the sealing elements (09), **characterized by** the configuration of the sealing washer (01) according to one of the preceding claims.

12. Rotor according to Claim 11,
the closing washer segment (05) being wider than a blade holding root and extending over an angle which is smaller than twice the separation of the blade holding grooves (18).

## Revendications

1. Bague (01) d'étanchéité à utiliser dans un rotor, notamment d'une turbine à gaz,
- comprenant une surface (21) de contact, qui (21) fait un angle avec une direction radiale de 15° au maximum et est délimitée par un bord (22) extérieur de contact et par un bord (23) intérieur de contact, et
- comprenant une surface (24) d'appui, qui (24) fait un angle avec l'axe du rotor de 15° au moins et de 45° au maximum et est délimitée par un bord (25) avant d'appui et par un bord (26) arrière d'appui,
comprenant au moins
- une partie (07) annulaire s'étendant dans la direction du pourtour et
- une partie (11) d'application d'une pression, qui se raccorde d'une pièce dans la direction du pourtour à une première extrémité (12) de la partie (07) annulaire et qui forme un intervalle (15) avec une deuxième extrémité (14) de la partie annulaire ou d'une autre partie (07) annulaire, et
- une partie (13) triangulaire, qui (13) se raccorde d'une pièce dans la direction du pourtour à la deuxième extrémité (14) de la partie annulaire et forme un intervalle avec la première extrémité (12) de la partie annulaire et chevauche la partie (11) d'application d'une pression le long d'une surface (27) de séparation, un bord (28) inférieur de la surface (27) de séparation étant disposé entre le milieu de la surface (21) de contact et le bord (23) intérieur de contact,
**caractérisé**
**en ce que** la surface de section transversale de la partie (13) triangulaire représente au maximum 0,3 fois la surface de section transversale de la partie (07) annulaire, et un bord (29) supérieur de la surface (27) de séparation est disposé entre le milieu de la surface (24) d'appui et le bord (26) arrière d'appui.

2. Bague (01) d'étanchéité suivant la revendication 1,
ayant une largeur de bague d'étanchéité dans la direction axiale et une hauteur de bague d'étanchéité dans la direction radiale,
dans laquelle la surface (21) de contact a une hauteur de contact représentant au moins 0,5 fois la hauteur de la bague d'étanchéité et/ou
dans laquelle la surface (24) d'appui a une largeur d'appui représentant au moins 0,5 fois la largeur de la bague d'étanchéité.

3. Bague (01) d'étanchéité suivant la revendication 1 ou 2, dans laquelle la distance du bord (28) inférieur de la surface de séparation est plus petite au bord (23) intérieur de contact qu'au milieu de la surface (21) de contact et/ou dans laquelle la distance du bord (29) supérieur de la surface de séparation est plus petite au bord (26) arrière d'appui qu'au milieu de la surface (24) d'appui.

4. Bague (01) d'étanchéité suivant l'une des revendications 1 à 3,
dans laquelle un angle, entre la surface (27) de séparation et la direction radiale, ainsi qu'entre la surface (27) de séparation et l'axe du rotor, est compris entre 35° et 55°, notamment entre 40° et 50°.

5. Bague (01) d'étanchéité suivant l'une des revendications 1 à 4,
formée d'au moins deux segments (03, 04, 05) annulaires, qui (03, 04, 05) sont formés respectivement par une partie (07) annulaire et respectivement, des deux côtés, par une partie (11) d'application d'une pression ou par une partie (13) triangulaire.

6. Bague (01) d'étanchéité suivant l'une des revendications 1 à 5,
dans laquelle un segment annulaire de fermeture a des deux côtés une partie triangulaire.

7. Bague (01) d'étanchéité suivant l'une des revendications 1 à 6,
dans laquelle la partie (07) annulaire d'un segment (05) annulaire de fermeture s'étend sur 20° au maximum.

8. Bague (01) d'étanchéité suivant l'une des revendications 1 à 5,
dans laquelle au moins deux, notamment tous les segments (03, 04) annulaires sont formés de parties pareilles.

9. Bague (01) d'étanchéité suivant l'une des revendications 1 à 8,
dans laquelle la distance du bord (22) extérieur de contact au bord (25) avant d'appui représente au maximum 0,2 fois la largeur de la bague d'étanchéité, dans laquelle notamment le bord (22) extérieur de contact et le bord (25) avant d'appui sont reliés entre eux par un arrondi et/ou un méplat (31) .

10. Bague (01) d'étanchéité suivant l'une des revendications 1 à 9,
qui (01) a en section transversale, à l'opposé de la surface (21) de contact en raccordement à la surface (24) d'appui, une partie (32) arquée et notamment, entre la partie (32) arquée et la surface (21) de contact, une partie (33) droite sur la face tournée vers l'axe du rotor.

11. Rotor, notamment d'une turbine à gaz, comprenant un disque (17) rotorique, qui (17) a, réparties sur le pourtour, une pluralité de rainures (18) de retenue d'aube, et une pluralité d'aubes (19) mobiles, qui (19) sont fixées chacune par une emplanture de retenue d'aube dans une rainure (18) de retenue d'aube, et une pluralité d'éléments (09) d'étanchéité disposés devant un côté frontal du disque (17) rotorique et un côté frontal des emplantures de retenue d'aube, dans lequel une bague (01) d'étanchéité est disposée entre le côté frontal et les éléments (09) d'étanchéité, **caractérisé par** la réalisation de la bague (01) d'étanchéité suivant l'une des revendications précédentes.

12. Rotor suivant la revendication 11,
dans lequel le segment (05) annulaire de fermeture est plus large qu'une emplanture de retenue d'aube et s'étend sur un angle plus petit que deux fois le pas des rainures (18) de retenue d'aube.
